**Europäisches Patentamt**

**European Patent Office**

**Office européen des brevets**

(19)

(11) Publication number : **0 512 862 A1**

## (12) EUROPEAN PATENT APPLICATION

(21) Application number : **92304179.2**

(22) Date of filing : **08.05.92**

(51) Int. Cl.⁵ : **B62D 53/06**

(30) Priority : **10.05.91 ES 9101151**

(43) Date of publication of application :
**11.11.92 Bulletin 92/46**

(84) Designated Contracting States :
**AT BE CH DE DK FR GB GR IT LI NL PT SE**

(71) Applicant : **FEROZ, S.L.**
**Juan de Garay, 2-14B**
**E-48003 Bilbao (Vizcaya) (ES)**

(72) Inventor : **Fernandez Santamaria, Felix**
**Virgen de Begona, 10-3**
**E-48006 Bilbao (Vizcaya) (ES)**

(74) Representative : **Maguire, Peter Albert et al**
**P.A. Maguire & Co. 12, The Broadway**
**St. Ives, Cambridge PE17 4BN (GB)**

(54) **Device for varying the load on the driving wheels of a vehicle.**

(57) A device which is applicable to vehicles comprising a tractor (5) with one or two driven axles which have a fifth wheel (3) for harnessing the semitrailer, with the aim of increasing the load on the driving wheels (11,22,23) in order to avoid slippages and which includes the incorporation of a single or double acting hydraulic or pneumatic cylinder (8,19,30), which is fixed on the one hand to the fifth wheel (3) and on the other hand to the chassis of the tractor (5), in such a way that when the cylinder (8,19,30) is activated from the cabin it can initiate a swinging of the fifth wheel (3) and determine with it a series of structural stresses which make the load vary on the driving wheels (11,22,23).

Figure 5

EP 0 512 862 A1

This invention is concerned with a device for varying the load on the driving wheels of a vehicle.

Heretofore, a load carried on a platform of a vehicles, has been stabilized during transport. All the wheels of the vehicle supported the load and neither the load nor its position on the platform changed, and each wheel supported a constant load.

When such vehicles cross land which is muddy, slippery, rocky, covered with snow, hail, etc, or which has marked slopes, there exist problems with slipping of the driving wheels of the vehicle. These problems have resulted in the application of chains or other elements which in one way or another try to avoid slipping.

By means of the device which is the subject of the present invention, the problems of slipping may be avoided or mitigated, without the driver of the vehicle leaving his cabin, since from the cabin it is possible to increase the load on those driving wheels which need it. In this way, manoeuvring problems are reduced or resolved, which result it was not previously possible to achieve with the ease and precision desirable in these circumstances.

The present invention provides a device for varying the load on the driving wheels of a vehicle of the type which comprises a tractor having drive to one axle or both axles and having a fifth wheel for harnessing a semitrailer characterised in that it comprises a hydraulic or pneumatic cylinder, which is secured on the one hand to a swinging fifth wheel and on the other hand to a frame of the tractor, said cylinder being activatable from a cabin of the tractor to cause the fifth wheel to undergo an inclination which, when a semitrailer is harnessed to the fifth wheel, gives rise to structural stresses which determine the variation of the load on the wheels of the tractor.

The following is a description, by way of example, of embodiments of the invention, reference being made to the accompanying schematic drawings, in which:

Figure 1 is a side view of the rear part of a tractor, with the corresponding fifth wheel on its frame. At the front of the semitrailer is shown the harness which the semitrailer normally has, by which it is supported and connects with the fifth wheel. The device which is the subject of this invention is not shown in this figure.

Figure 2 is a side view of a tractor in which only the rear axle is a driven axle. The cylinder (8) has been shown which has to work on the fifth wheel to effect its swinging. Each push from the cylinder (8) brings about a gyration of the assembly of the bed (2) in the direction (A).

Figure 3 is a side view of a tractor with a single driven axle, already having produced the tension and gyration of the bed. More detail of the assembly is shown in figure 5.

Figure 4 is a side view of the assembly of a tractor with drive to the rear axle, with the semitrailer hitched up. In this figure the device has not yet been activated.

Figure 5 is a side view of the assembly when it is a tractor with traction in the rear axle, with the semitrailer harnessed. In this figure, the device is already activated and the structural tension of the assembly can clearly be seen and with it the transfer of the load.

Figure 6 is a side view of the assembly in the previous figure, when all the wheels seek the establishment of support on the ground, but preserving the internal tensions.

Figure 7 is a side view of the rear wheel of a tractor, which has drive to its two axles. The cylinder has been arranged in such a way that it can make the framework of the fifth wheel swing. This cylinder is supported on the frame of the tractor, at a point between its two wheels.

Figure 8 is similar to Figure 7, when the cylinder is already working. This figure is a detail of the assembly shown in figure 9.

Figure 9 is a side view of the assembly of a tractor with drive to its two axles. The cylinder is seen working and the internal tension of the structure is seen, tending to cause the separation of the wheels (22) from the ground.

Figure 10 is a side view of the assembly of the previous figure, but at the moment when everything is resting already on the ground, but following the internal tensions, since the cylinder (19) is pushing.

Figure 11 is a side view of an assembly fitted with a double acting cylinder. In this case this cylinder (30) is pushing.

Figure 12 is a side view of an assembly fitted with a double acting cylinder. In this case this cylinder (30) is exercising tension.

The following description refers to the reference numerals which have been used in the accompanying drawings and deals with the relationship existing between one element and another, in respect of both the manner of functioning and assembly.

1. Normal load of the vehicle. The load which is fixed in a stable manner to the bed of the vehicle (2).

2. The bed of the vehicle which receives the load (1). This bed is harnessed by traditional means to the part of the vehicle which should properly have a traction element. This bed, as already known, rests on the fifth wheel (3) and can be articulated freely by turning in the horizontal plane.

3. It is what is known in this type of vehicle as a fifth wheel. It is a part which in its normal installation can swing freely around the point (4) which is fixed onto the chassis of the vehicle (5) which acts as a tractor. On the other hand this piece called the fifth wheel acts as a platform to support and retain the end of the bed (2), but allows its free movement in the horizontal plane. In its already effected installation, the bed (2) comprises a unit with the fifth wheel, as can be seen in figures 2, 3, 7 and 8.

4. The point of swinging of the fifth wheel. This point of gyration is solidly fixed to the chassis of the vehicle (5) which acts as a tractor.

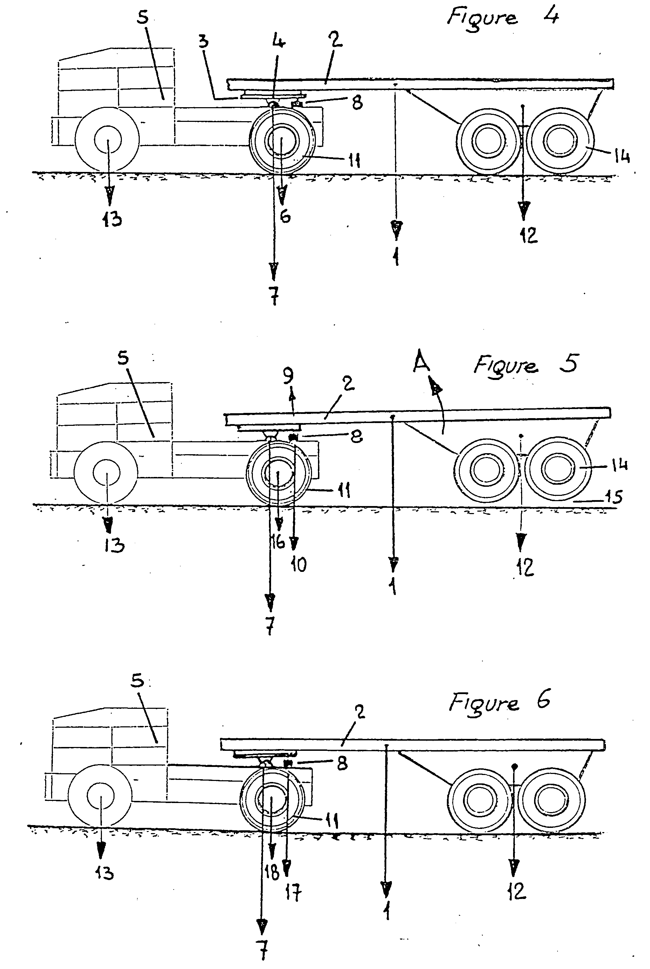

5. The chassis of the pulling vehicle. This chassis can belong to two types of towing unit: a tractor type towing unit, with a single towing axle, as shown in figures 4, 5 and 6, which only have one driven axle which corresponds to the wheels (11). A tractor type tower, with two driven axles, like that shown in figures 9 and 10, which has drive to both axles, then the wheels 22 and 23 are driven.

The device which is the subject of the present invention can be used in both types of towing vehicle. The difference in application rests only in the following respects:

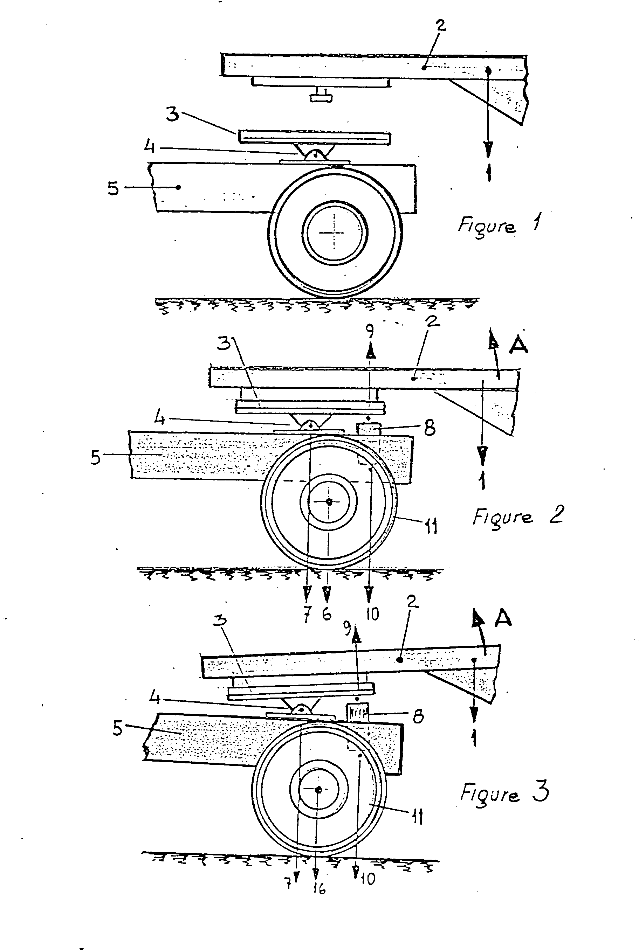

Type A: a tractor with one driven axle, figure 2 and 3; the pressure cylinder (8) is situated to the right of the axle of wheel (11). In this way the centre of the wheel (11) is between the mounting of the cylinder (8) and the point of swing (4) of the fifth wheel (3).

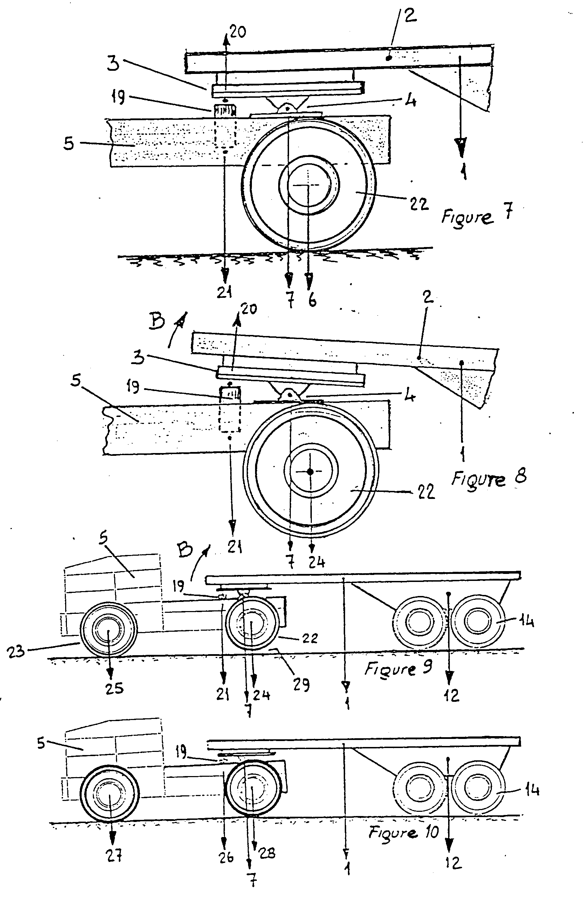

Type B: a tractor with two driven axles, figure 7 and 8; the pressure cylinder (19) is situated to the left of the centre of the wheel (22). In this way the point (4) of swing of the fifth wheel (3) is between the application of the cylinder (19) and the centre of the wheel (22).

In both cases, the aim of the cylinders (8) and (19) is to make the fifth wheel turn around the point of swing (4) fixed to the chassis of the towing vehicle.

6. The load which the wheel (11) receives, as can be seen in figure 2 and 4, when it concerns a vehicle with a single driven axle. It is precisely this load which it is wished to increase; therefore, it is this load (6) which the wheels (11) receive when the pressure cylinder device (8) has not yet been put into action.

7. The load which the chassis of the towing vehicle receives, in accordance with the total load (1) which the bed (2) transports. Looking at figure 4 it can be seen that the load (1) is distributed between the load (12) which the rear wheels (4) will receive and the load (7) which the chassis of the towing vehicle (5) will receive so that: (1) = (7) + (12). In its turn (7) is divided in the following way: The load which the wheels (11) receive will be (6). The load which the front wheels receive, which are not driven will be marked with (13).

8. The expansion cylinder, which is connected on the one hand to the frame of the fifth wheel (3) and on the other hand to the chassis of the tractor (5).

9. When the cylinder (8) expands it pushes following (9) against the fifth wheel, initiating its swinging.

10. Of equal intensity to (9) will be the reaction (10) on the chassis of the tractor.

11. The wheel of the driven axle of the tractor, when it concerns a tractor with a single driven axle.

12. The load which the wheels (14) receive from the semitrailer.

13. The load which the wheels of the tractor receive. In the case in figure 4 and 5 these wheels are not driven.

14. The wheels of the semitrailer.

15. The area where the wheels (14) tend to separate from the ground when the cylinder (8) is pushing by its expansion.

16. The load which the driven wheel (11) receives. Once the device is pressing and the load has increased which the wheel was supporting following (6) in the beginning.

17. When the assembly adapts itself better to the ground, although the tensions of the structure continue, the reaction of the chassis is reduced to (17).

18. The load which finally bears down on the wheel (11), a load which will always be greater than that which the aforementioned wheel (11) had to start with. This load will be greater than (6).

19. The cylinder which will push against the support of the fifth wheel. It will be in a support position on the chassis (5). It is the cylinder which will operate when it concerns a tractor with drive to both its axles. The push is to the left of the point of gyration (4).

20. The cylinder (19) in its expansion will push with force (20) trying to make the assembly turn along the direction (B).

21. The force equal to (20) but on the chassis of the tractor (5).

22. The rear wheel of the tractor which has drive to both its axles.

23. The front wheel of the tractor which has drive to both its axles.

24. The load which the wheel (22) will support from which the cylinder is pushing (19) along the direction (B). This load (24) will be greater than that previously supported (6) by the same wheel. Thanks to this new force, slipping will be avoided.

25. Also the front wheel (23) will receive an increase in load. The result of the increase will be the new load (25).

26. When the vehicle seeks equilibrium, it remains as shown in figure 10, then the load on the chassis will be (26), resultant loads being initiated on the front and rear wheels of the tractor.

27. The load for the front wheels, which will be greater than that supported initially.

28. The load for the rear wheels which will be greater than that supported initially.

29. Indication that the wheels (22) tend to separate from the ground.

30. A possible installation of a double acting cylinder.

It will therefore be seen that a device according to the invention is intended for tractors with semitrailers, tractors which may have:

- A single driven axle, the rear axle.
- Two driven axles, the front and the rear axles.

In both cases it concerns the incorporation of a hydraulic or pneumatic cylinder which is mounted on the chassis (5) of the tractor on the one hand and on the body of the swinging fifth wheel (3) on the other hand.

This hydraulic or pneumatic cylinder has in whichever case a definite purpose:

- To make the fifth wheel (3) swing on its axis of gyration (4).
- Commanding the aforementioned hydraulic or pneumatic cylinder from the cabin, it is not necessary for the driver to descend from his cabin.

This hydraulic or pneumatic cylinder can be positioned in various ways, but in all cases, in whatever way of working, its aim is always the same: to operate, in such a way that the fifth wheel (3) should swing around its axis of gyration (4).

On the fifth wheel, the coupling of the semitrailer may be achieved in the traditional way, since the incorporation of the device has nothing to do with the type of coupling which may remain unchanged.

The different means of installing the device may be as follows:

## Figures 2, 3, 4 and 5

They serve to show a tractor with a single driven axle. The driven wheels are shown with (11). A hydraulic or pneumatic cylinder (8) has been arranged which is capable of operating by expansion. When said cylinder (8) is activated from the cabin, it is able to exerting pressure (9) which brings about the swinging of the fifth wheel following (A). Exerting a pressure (9), and exerting another equal pressure following (10) on the frame of the tractor (5).

## Figures 7, 8 and 9

They serve to show a tractor with two driven axles. The driven wheels are marked with (23) at the front and with (22) at the back. A hydraulic or pneumatic cylinder (19) has been positioned which is capable of operating by expansion. It can be seen that in this case its installation has been effected to the left of the point of gyration (4), when in the previous case it was done to the right. When said cylinder (19) is activated from the cabin, it is able to exert pressure (20) which brings about the swinging of the fifth wheel following (B). Exerting pressure following (20). Exerting an equal pressure following (21) on the frame of the chassis of the tractor (5).

In the two cases given an expansion cylinder has been used.

## Figures 11 and 12

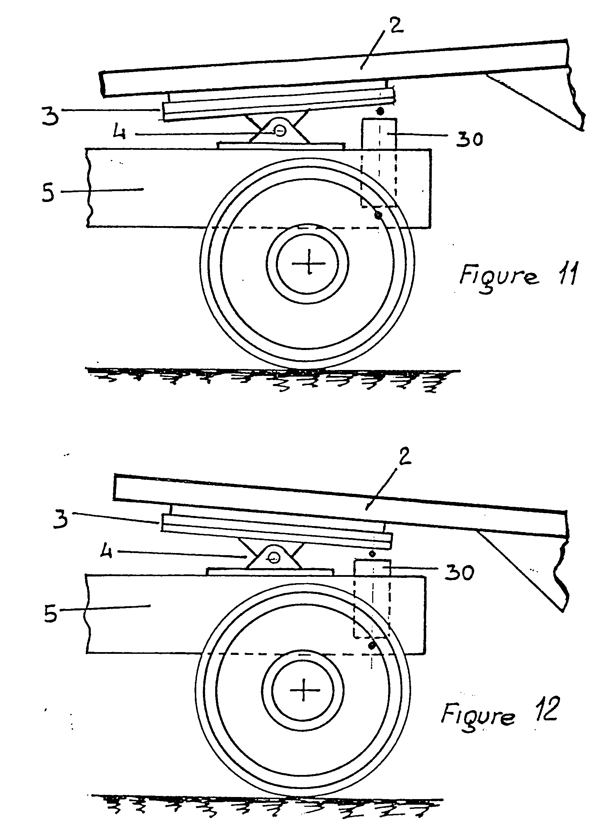

Serve to show the possibility of using a double acting cylinder (30); it is installed as it is installed, what is always wanted is to make the fifth wheel swing in one direction or the another; the cylinder will be activated from the cabin, both as to the degree of expansion as is the case in figure 11 and as to the tension mode as is the case in figure 12.

These different arrangements of the cylinders have been shown by way of simple examples.

What is important, as has already been stated and repeated is that by means of a hydraulic or pneumatic cylinder the frame of the fifth wheel (3) is made to swing around the point of gyration (4).

What has been indicated is the means of installation; immediately hereafter will be given the explanation of the working of the device and the justification of how this device succeeds in varying the load on the driving wheels without the driver descending from the cabin.

## The performance of a tractor which has a single driven axle.

Figures 2, 3, 4, 5 and 6, with the device and its actuation, show the increase in the load on the wheels (11) which is the desired aim.

The explanation is precisely in this sense, to justify the method and that by which this increase in load is effected. Whenever an increase in the load (6) which the wheel (11) supports is achieved, the avoidance of slipping will have been achieved. The load (1) will be fixed to the bed (2) of the vehicle. Said load (1) is distributed in such a way that the wheels (14) of the semitrailer receive the load (12) and on the other hand the chassis of the tractor (5) receives the load (7). At all times (1) = (12) + (7).

The load (7) on the chassis of the tractor (5) is distributed in the following way:

One part (13) is received by the front wheels of the tractor and the other part by the rear wheels (11) which are those of the driven axle the load being on these wheels (11), the load (6). At all times (7) = (13) + 6.

After this explanation of the distribution of the weight of the load (1) on the wheels of the vehicle, we must explain what happens from the moment when the device which is the object of this invention starts functioning.

The expansion cylinder (8) is operated from the cabin. In figure 5 has been shown the tension of gyration (A) which is produced in the moment when the cylinder (8) is pushing following (9) and producing an equal reaction (10) on the chassis of the tractor (5). This pressure following (10) is transmitted almost entirely on the wheels (11), in this way by the action of the cylinder (8) expanding, the load on the wheels (11) becomes (16).

Taking into account that this load (16) will be of such magnitude that (16) = (7) + (10) is practically produced.

This increase in load on the wheels (11) is what is required and is achieved by the action of the cylinder (8) in its expansion and consequent gyration or swinging in (4) of the fifth wheel (3). The structural modification which has been shown in figure 5 is not that which is actually produced, with a practical lifting-off of the wheels (14) separating themselves from the ground following (15). But the structural tension is certainly present, and even when the vehicle apparently remains in repose, the certain fact is that while the cylinder (8) pushes, the wheel (11) will remain with a load (18) superior to that which it had at the start following (6) achieving this increase in load in an effective way, which is what is required, an increase which is sufficient to avoid slipping at the time this becomes apparent.

By means of the device is achieved:
(6) < (18).

Performance of a tractor which has two driven axles.

Figures 7, 8, 9, and 10, with the device and its actuation, show that what is desired is the increase in the load on the driven wheels, the front wheels (23) as well as the rear wheels (22); whenever an increase in the load on the said driven wheels is achieved the avoidance of slipping will be achieved. The load (1) will be fixed to the bed of the vehicle (2). Said load already indicated previously is distributed in the following way:

The load (7) on the chassis of the tractor, the load (12) on the wheels of the semitrailer (14).

At all times the distribution answers to (1) = (12 + (7). From the moment at which the activation of the cylinder (19) commences pressure is exerted on the fifth wheel following (20) and an equal reaction on the chassis (5) of the order of load (21).

The pressure (21) is distributed on one part to the front wheels (23) and on the other part to the rear wheels (22). In this way the load on the front wheels (23) arrives at (25) and the load on the rear wheels (22) arrives at (24). This pressure from the cylinder (19) leads to a structural tension like that shown in figure 9, as if it were to separate the wheel (22) from the pavement following the separation (29). In the initial tension, as can be seen in said figure 9 the load on the front wheels (23) can be seen to increase, which is something which favours the good working of the tractor. After there comes a balance, but while the tension in the cylinder (19) lasts, an overload is maintained on the driven wheels.

Advantages of the invention in relation to the state of the prior art are as follows:
- Slippages are avoided, operating from the cabin.
- Slippages are avoided because of the increased load on those wheels which act as the driving elements.
- The increase in load is done with the intensity which the surface supporting the vehicle requires.

Everything depends on what activates the pressure on the cylinder with the greatest efficiency.
- The cylinders may be positioned in many different ways.
- The cylinders may be single or double acting.
- The installation of the cylinders in no way compromises the harnesses of the semitrailers.
- Once the slippages have been overcome, the assembly structure returns to its normal position.

The vehicle will cease to be influenced by the cylinder. The cylinder will only operate when the driver needs it. Meanwhile the cylinder will have no effect whatsoever and will cease to influence tensions in the structure.

Increase in load is provided on those wheels which need it. An increase which will be in accordance with the problem which it is wished to solve.

## Claims

1. A device for varying the load on the driving wheels of a vehicle of the type which comprises a tractor (5) having drive to one axle or both axles and having a fifth wheel (8), for harnessing a semitrailer (2) characterised in that it comprises a hydraulic or pneumatic cylinder (9,19,30), which is secured on the one hand to a swinging fifth wheel (3) and on the other hand to a frame (5) of the tractor, said cylinder being activatable from a cabin of the tractor to cause the fifth wheel to undergo an inclination which, when a semitrailer is harnessed to the fifth wheel, gives rise to structural stresses which determine the variation of the load on the wheels (11,22,23) of the tractor (5).

2. A device according to claim 1 characterised in that the cylinder (8,19,30) is single-acting.

3. A device according to claim 1 characterised in that the cylinder (8,19,30) is double-acting.

Figure 1

Figure 2

Figure 3

Figure 4

Figure 5

Figure 6

Figure 7

Figure 8

Figure 9

Figure 10

Figure 11

Figure 12

**European Patent Office**

# EUROPEAN SEARCH REPORT

Application Number

EP 92 30 4179

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 580 609 (M. F. PAIELLI)<br>* column 1, line 61 - column 2, line 26; figures 1-3 * | 1 | B62D53/06 |
| A | | 2 | |
| X | US-A-3 363 914 (C. NEEL)<br>* column 2, line 58 - column 4, line 25; figures 1-3 * | 1 | |
| A | | 2 | |
| A | US-A-4 323 264 (M. F. PAIELLI)<br>* column 2, line 17 - column 3, line 18; figures 1-4 * | 1,2 | |
| | ----- | | |
| | | | **TECHNICAL FIELDS SEARCHED (Int. Cl.5)**<br><br>B62D |

The present search report has been drawn up for all claims

| Place of search | Date of completion of the search | Examiner |
|---|---|---|
| THE HAGUE | 17 AUGUST 1992 | P. CHLOSTA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                             
& : member of the same patent family, corresponding document

EPO FORM 1503 03.82 (P0401)